# FASCICULE DE BREVET EUROPEEN

(11) **EP 0 360 673 B1**
(45) Date de publication et mention de la délivrance du brevet: **10.11.1993**
(21) Numéro de dépôt: 89402541.0
(22) Date de dépôt: 15.09.1989
(51) Int. Cl.: G01F 1/66, G01F 1/36

(54) **Procédé et dispositif destinés à indiquer le débit d'un fluide compressible circulant dans un détendeur, et capteur de vibrations utilisé à cet effet**
Verfahren und Vorrichtung zur Durchflussanzeige einer durch ein Reduzierventil umlaufenden kompressiblen Flüssigkeit und dazu benutzter Schwingungssensor
Process and device for indicating the rate of flow of a compressible fluid circulating through a pressure reducer, and vibration sensor for the same

(30) Priorité: 23.09.1988 FR 8812490
(43) Date de publication de la demande: 28.03.1990
(73) Titulaire: GAZ DE FRANCE (SERVICE NATIONAL), F-75017 Paris (FR)
(72) Inventeur: Chaumont, Claude, F-93430 Villetaneuse (FR); Waroux, Maurice Denis, F-95270 Saint Martin du Tertre (FR); Bonneric, Paul, F-93400 Aubervilliers (FR); Jannin, Bernard, F-77220 Tournan en Brie (FR)
(74) Mandataire: Lerner, François

(56) Documents cités:
- EP-A- 0 104 004
- EP-A- 0 198 731
- EP-A- 0 264 991
- DE-A- 3 301 855
- US-A- 3 218 852
- PATENT ABSTRACTS OF JAPAN, vol. 8, no. 86 (P-269)[1523], 19 avril 1984, page 131 P 269;& JP-A-59 3216

## Description

L'invention concerne en particulier un procédé et un dispositif permettant d'indiquer à un opérateur la valeur du débit d'un fluide compressible, tel qu'un gaz combustible, s'écoulant dans une conduite, laquelle est équipée d'un détendeur pour le fluide considéré.

Il existe à ce jour de nombreux instruments pour la mesure de débits de fluide.

Pour effectuer de telles mesures, la publication DE-A-3 301 855 enseigne par exemple la possibilité d'utiliser un capteur de vibrations, au moins un capteur de pression et un micro-ordinateur relié à ces capteurs pour indiquer la vitesse ou le débit correspondant du fluide s'écoulant dans une conduite.

Le brevet US-A-3 218 852, quant à lui, propose un débitmètre particulier intégré à une section de conduite que l'on doit interposer entre deux extrémités de canalisation dont on veut mesurer le débit de fluide. Le débitmètre comporte une seconde équipée d'un transducteur électroacoustique sensible aux vibrations du fluide en mouvement, une unité de traitement étant associée à ce débitmètre pour fournir une donnée qui est une fonction sensiblement linéaire de la vitesse du fluide.

L'abrégé du brevet japonais JP-A-59 32 16 (vol.8 n°86 page 131 P 269) propose une solution consistant à enregistrer et à afficher la valeur absolue de la vitesse d'un fluide (comprenant, en mélange, un liquide et de la vapeur), en établissant pour cela à l'avance des courbes d'intensité et de fréquences de vibrations du liquide d'une part et de la vapeur d'autre part, et en comparant à ces courbes préétablies les valeurs réellement mesurées dudit fluide circulant en mélange.

La publication EP-A-0 198 731 se rapporte à un capteur pour ondes ultrasonores utilisable pour la mesure de débits dans une canalisation dont la paroi peut être à haute température. Dans ce but, le capteur vient en contact avec ladite paroi par l'intermédiaire d'un guide d'ondes en matière vitrocéramique, reliée à une pastille piézoélectrique connectée à des conducteurs électriques d'alimentation et/ou de mesure.

Quant à la publication EP-A-0 264 991, elle se réfère à un débitmètre ultrasonore équipé de deux transducteurs piézoélectriques verrouillés sur deux côtés opposés de la conduite et qui transmettent alternativement des impulsions ultrasonores dans cette conduite tout en captant les impulsions (re)transmises par celle-ci, afin de définir le débit du fluide qui y circule à partir des temps de passage des impulsions soniques circulant vers l'aval et vers l'amont.

Il reste toutefois que tous ces appareils et leurs principes d'utilisation demeurent spécialisés et ne paraissent pas d'emblée adaptés pour indiquer le débit d'un fluide sous pression sur une conduite équipée d'un détendeur.

Aussi, en particulier dans le domaine gazier, lorsque l'exploitant veut connaître la consommation globable des abonnés raccordés à un même poste de détente, celui-ci est souvent réduit à écouter "à l'oreille" le bruit émis par le détendeur. Mais cette "évaluation" est d'autant plus subjective que le bruit dans son ensemble varie en fonction de la pression établie en amont du détendeur, par rapport à la pression établie en aval, en fonction de la température et de la nature du fluide en circulation, et aussi en fonction de la géométrie du détendeur et des conduites qui lui sont raccordées.

On notera que ce dernier point est particulièrement important, dans la mesure où plusieurs fabricants ont, ces dernières années, développé des détendeurs dits "silencieux" qui dispersent les veines de fluide et déplacent les niveaux sonores et les gammes d'émission des sons. Evaluer un débit dans ces conditions est donc réellement une gageure.

L'invention a pour objet de résoudre ces difficultés en proposant un système permettant en quelque sorte de rationaliser cette écoute du bruit émis par un détendeur et par le fluide pendant la détente.

Pour cela, l'invention propose en particulier un dispositif indicateur de débit d'un fluide compressible, notamment d'un gaz combustible, s'écoulant dans une conduite, laquelle est équipée d'un détendeur, ce dispositif comprenant :
- un capteur de vibrations avec un transducteur, par exemple du type piézoélectrique, adapté pour transmettre des signaux électriques correspondant aux vibrations reçues, ce capteur étant disposé à proximité du détendeur aux vibrations duquel il est sensible, de manière à en capter les ondes vibratoires,
- un capteur de pression disposé sur la conduite, en amont du détendeur et adapté pour transmettre des signaux électriques correspondant à la pression mesurée,
- une unité analogique/numérique reliée auxdits capteurs de vibration et de pression pour acquérir les signaux qu'ils transmettent,
- et un calculateur numérique relié à l'unité analogique/numérique pour recevoir ses données et indiquer en sortie le débit correspondant de fluide, ce dispositif se caractérisant en ce que,
   a) - il comprend en outre :
      . une unité de conditionnement des signaux transmis par le transducteur, cette unité comprenant au moins un amplificateur, un détecteur de seuil pour caler le zéro du seuil de référence desdits singaux, au moins un filtre passebande et un circuit formant redresseur de mise en forme de ces signaux,
      . et des moyens mémoire adaptés de façon à stocker lors d'une phase d'étalonnage et à fournir ultérieurement un calculateur des données de référence correspondant à des valeurs de signaux électriques représentatives de vibrations émises par le détendeur en fonction de valeurs prédéterminées de débit de fluide et de différence de pression entre l'amont et l'aval de ce détendeur, à pression aval supposée constante,
   b) - et le calculateur numérique indique, en fonction des données stockées dans lesdits moyens mémoire, le débit de fluide correspondant à des valeurs de vibration et de pression amont relevées à un moment donné par les capteurs respectifs, ceci à pression en aval du détendeur supposée constante et donc pour une différence de pression donnée entre l'amont et l'aval de ce même détendeur.

On note que, ci-dessus, on a supposé, comme constante la pression du fluide en aval du détendeur. Or, en pratique, cette pression peut varier. Aussi, de façon à pouvoir proposer à l'opérateur des résultats "affinés, on a prévu que le dispositif de l'invention puisse prendre en considération cette variation de pression. Dans ce cas, et comme indiqué en revendication 2, on recourt à un (des) capteur(s) de pression différentielle permettant d'obenir la différence de pressions entre l'amont et l'aval du détendeur.

Outre ce type de dispositif, l'invention propose également un procédé global de détermination de débit, appliqué soit aux mesures à pression en aval du détendeur supposée constante (revendication 6), soit aux mesures à pression aval pouvant varier (revendication 7).

Ainsi, le calculateur numérique travaillera-t-il toujours avec un différentiel de pression connu.

D'un point de vue pratique, on notera encore que, en particulier dans une application gazière et compte-tenu des détendeurs existants à ce jour dans ce domaine, l'unité de conditionnement du signal émis par le capteur de vibrations assurera de préférence un filtrage dans une bande de fréquences ultrasonores, pouvant s'étendre entre 15 et 25 KHerz environ.

On notera également qu'une attention particulière a été accordée à la réalisation du capteur de vibrations, d'autant que des perturbations de meusre ont été constatées lors d'essais menés en condition réelles d'utilisation, en milieu urbain, ces perturbations provenant notamment des "bruits de la rue" (automobiles, éventuellement métro...).

Les caractéristiques du capteur énoncées en revendication 4 tiennent compte de cela, en prévoyant en particulier l'adjonction d'une masselotte servant de référence mécanique aux gammes de fréquences susceptibles d'exciter le transducteur.

L'invention, ses caractéristiques et avantages apparaîtront encore plus clairement de la description qui va suivre faite en référence aux dessins d'accompagnement dans lesquels :
- la figure 1 illustre schématiquement un poste de détente et de comptage conventionnel utilisé sur un réseau de gaz combustible et sur lequel a été disposé le dispositif indicateur de débit de l'invention que l'on a representé de façon schématique,
- la figure 2 est une vue partiellement en coupe longitudinale du capteur de vibrations de l'invention installé à proximité du détendeur aux vibrations duquel il est sensible,
- la figure 3 est une vue partielle dans le sens de la flèche III de la figure 2 du capteur précité monté sur une bride,
- la figure 4 est un schéma synoptique de réalisation d'un appareillage électronique permettant l'utlisation du dispositif indicateur de débit schématisé sur la figure 1, cette vue de la figure 4 montrant le transducteur du capteur de vibrations, le capteur de pression, l'unité de traitement du signal de vibrations, l'unité analogique/numérique d'acquisition des données fournies par le capteur de vibrations et de pression et, en fin de chaîne, le calculateur de débit.

La Figure 5 illustre, sous la forme d'une représentation graphique, les données que le calculateur possède en mémoire lors de la mise en service opérationnelle du dispositif,
et la Figure 6 illustre schématiquement,mais de façon plus détaillée,l'exemple de réalisation conforme à l'invention du circuit électronique correspondant à l'unité de traitement illustrée Figure 4.

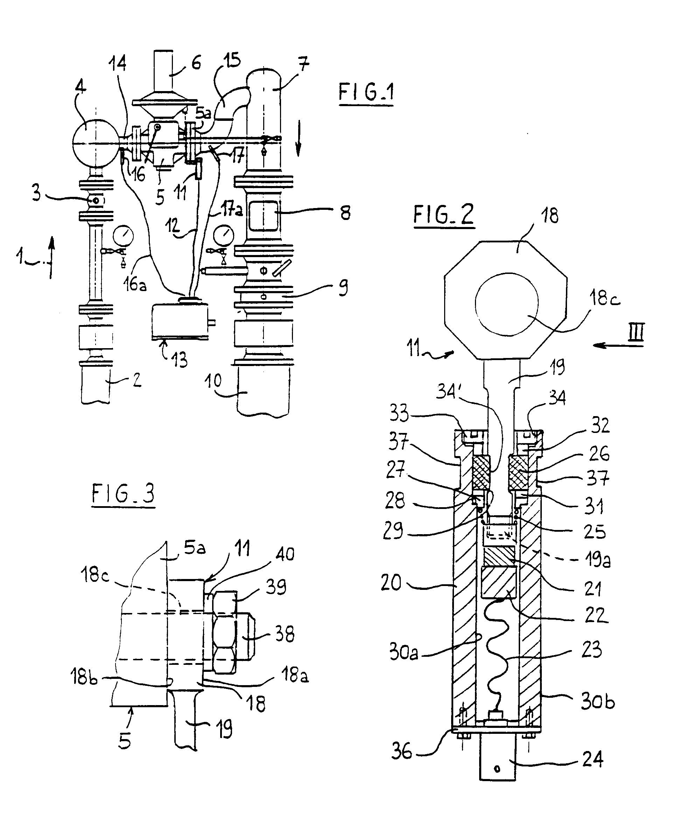

En faisant tout d'abord référence à la Figure 1, on voit illustré un poste de détente, tel qu'on le trouve habituellement sur les réseaux de distribution de gaz combustible alimentant des usagers.

Ce poste comprend, dans le sens de circulation du gaz repéré par la flèche 1, une conduite 2 d'alimentation en gaz, une vanne d'entrée 3, un filtre 4, une vanne de détente 5, équipée d'un régulateur 6, une canalisation de liaison 7, un compteur 8 et, débouchant sur une conduite de distribution 10 du gaz aux usagers, une vanne de sortie 9.

Conformément à l'invention, sur l'une des brides 5a de la vanne de détente, ou détendeur 5, est fixé extérieurement un capteur de vibrations 11 relié par un câble électrique, tel qu'un câble coaxial 12, à un poste 13 d'analyse sur lequel on reviendra ci-après.

Figure 1, on notera encore qu'en amont et en aval du détendeur 5, sur les tronçons de canalisations 14 et 15 respectivement, sont branchés des capteurs de pression 16 et 17 destinés à fournir au poste d'analyse 13 des données correspondant aux pressions en amont et en aval du détendeur, par l'intermédiaire des câbles électriques de liaison respectivement 16a et 17a.

On notera dès à présent que, même si la présence du capteur 17 de pression aval peut s'avérer utile, elle n'est pas absolument indispensable, dans la mesure où en exploitation, on peut avec une bonne approximation considérer comme pratiquement constante la pression en aval des détendeurs sur les réseaux de distribution de gaz.

Cette précision étant apportée, reportons-nous maintenant à la Figure 2 pour voir illustré plus en détail un exemple de réalisation du capteur de vibration 11.

Comme représenté, le capteur 11 comprend une tête métallique 18, par exemple en acier inoxydable, destinée à recevoir les vibrations émises par le détendeur 5 et le fluide qui circule et permettant de suspendre le capteur, de façon qu'il soit réceptif aux vibrations du détendeur.

La tête 18 se prolonge par une tige 19, vers l'intérieur du corps 20 du capteur dans lequel est disposé, lié mécaniquement à la tige 19 (par exemple par collage), un transducteur 21 constitué en l'espèce par une pastille de céramique piézo-électrique, elle-même liée mécaniquement du côté opposé à la tige 19, à une masselotte métallique 22 à laquelle est connecté un fil de liaison électrique 23 relié par ailleurs à une borne de sortie 24 du capteur formée en l'espèce par l'embase d'une prise coaxiale. Une plaque 36 de fermeture assure le montage en étanchéité de la prise sur le corps 20.

Compte-tenu des conditions d'exploitation parfois rigoureuses que pourra rencontrer le capteur, la pastille piézo-électrique sera de préférence enrobée d'une pellicule en matière plastique étanche protégeant la céramique et ses contacts de l'humidité.

Comme on le voit clairement, toujours sur la Figure 2, le corps 20 du capteur se présente sous la forme d'un manchon tubulaire permettant le logement, outre d'une partie de la tige 19 et de la pastille 21 équipée de sa masselotte 22, d'un ressort métallique 25 et d'un joint 26 élastique, en caoutchouc dur par exemple. Une fois le capteur suspendu, le ressort 25 est mis en compression entre un épaulement 29 de la tige 19, au niveau duquel épaulement la tige vient se visser par l'intermédiaire d'un pas de vis 19a, et une rondelle métallique 27, laquelle vient s'appuyer sur un épaulement 28 formé sur la paroi intérieure 30a du corps 20.

Sur la face opposée de la rondelle 27 vient s'appuyer une autre rondelle 31 par exemple en Nylon (marque déposée), laquelle enserre, avec la rondelle en Nylon 32, le joint 26 pour assurer sa mise en compression par l'intermédiaire d'une bague filetée 33 se vissant sur un pas de vis intérieur 34 formé à l'extrémité supérieure du corps 20. Deux méplats 37 formés en vis-à-vis sur la paroi extérieure 30b du corps 20 faciliteront les opérations de vissage et de dévissage de la bague 33.

On notera encore que pour son maintien, le joint 26 est retenu sur la tige 19 au niveau d'un rétrécissement que celle-ci présente localement en 34′ sur sa périphérie.

Avec une telle disposition, une fois le joint 26 mis en compression et le capteur suspendu par sa tête 18, par exemple sur une bride du détendeur 5, la tige 19 de transmission des vibrations le transducteur et la masselotte 20 seront-ils parfaitement solidaires physiquement du corps auquel ils ne seront toutefois reliés mécaniquement et électriquement que par le ressort 25, le joint 26 d'isolement vibratoire évitant le contact métal-métal entre la tige et le corps du capteur.

Ainsi, les vibrations, en particulier de hautes fréquences (fréquences ultra-sonores), provenant du détendeur seront-elles transmises à la pastille céramique 21 sans être "court-circuitées" ou perturbées par le manchon 20 qui assurera alors pleinement son rôle de masse électrique pour le transducteur et de protection contre les parasites radio-électriques.

A cette étape de la description, il semble important de s'arrêter quelque peu sur le rôle de la masselotte 22 qui est avantageusement fixée à la pastille piézo-électrique 21 et dont la présence s'est avérée particulièrement utile au cours des essais qui ont été menés, dans la mesure où cette masselotte, d'une masse déterminée, a permis de s'affranchir d'une partie des vibrations parasites particulièrement néfastes à un bon fonctionnement du capteur, vibrations basses fréquences (en général inférieures à 1 000 Hertz) dues pour la plupart aux "bruits de la rue" (circulation automobile, trépidations dues à des travaux, etc...).

Comme on l'a compris, lors du fonctionnement du capteur 11, la masselotte 22 absorbera donc les fréquences de vibrations inférieures à un seuil déterminé, jouant en quelque sorte le rôle de filtre mécanique passe-haut avec une fréquence de coupure correspondant au seuil minimum de vibrations pouvant êtres émises par le détendeur sur lequel aura été monté le capteur.

Reportons-nous maintenant brièvement, pour comparaison, aux Figures 2 et 3 de manière à décrire rapidement une forme possible de réalisation de la partie formant tête 18 du capteur 11.

Telle qu'illustrée, cette tête 18 peut notamment se présenter sous l'aspect d'une sorte de rondelle multipans comportant deux faces opposées 18a et 18b (Figure 3) planes, ainsi qu'un orifice central 18c permettant, comme illustré sur la Figure 3, le montage suspendu du capteur 11 sur l'une des brides du détendeur, par engagement de la tête 18 sur un arbre fileté 38 de la bride, avec serrage au moyen d'un ensemble écrou 39/ rondelle 40, de façon à assurer la fixation mécanique étroite du capteur sur le détendeur, évitant ainsi à ce capteur tout mouvement désordonné générateur de vibrations parasites.

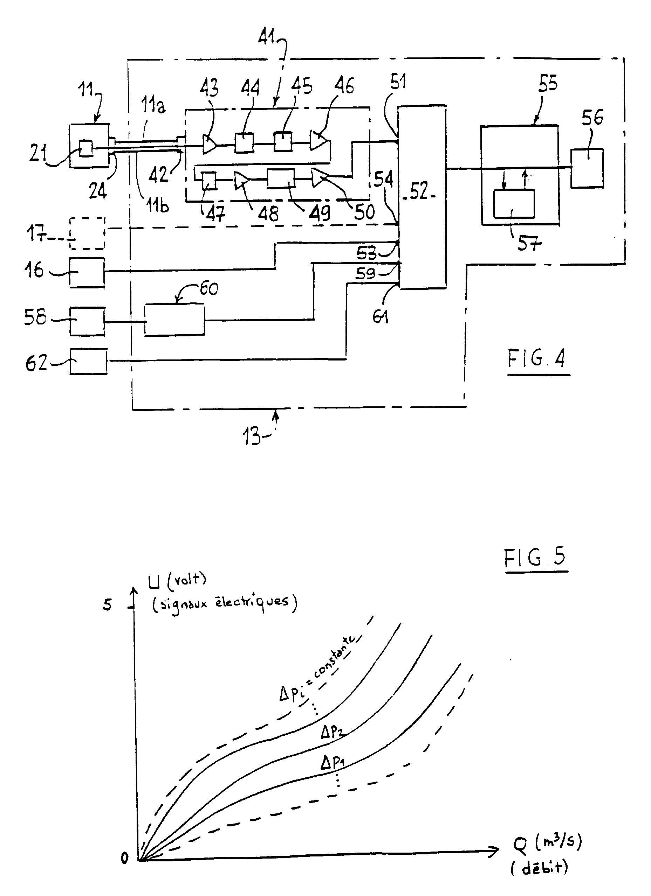

Figure 4, on a illustré sous la forme d'un schéma synoptique, le dispositif 13 de l'invention qui, alimenté en entrée par les données issues du capteur de vibrations 11 et des capteurs de pression amont 16, et éventuellement aval 17, du détendeur, permet de fournir en sortie une indication du débit de fluide s'écoulant dans le détendeur.

Figure 4, on notera que l'on a représenté en traits tiretés le capteur de pression aval 17 et son câble de connexion 17a, dans la mesure où un tel capteur n'est pas indispensable si l'on considère (avec malgré tout une bonne approximation) comme constante cette pression aval.

Comme illustré, le capteur 11 de vibrations du détendeur 5 est relié à une unité 41 de conditionnement des signaux électriques émis par le transducteur 21, ceci par l'intermédiaire d'un câble de connexion électrique 11a branché d'un côté sur la prise 24 du capteur et de l'autre sur une borne d'entrée 42 de l'unité 41. Le fil 11a sera en pratique blindé par un blindage relié à la masse électrique du capteur 11 et à celle de l'unité 41.

Le rôle de cette unité de conditionnement est de traiter le signal notamment en le filtrant dans une gamme de fréquences permettant de prendre en compte les vibrations de tous les détendeurs existants. La gamme retenue s'étendra donc,a priori, dans les fréquences ultrasonores,entre 15 et 25 KHertz environ.

Telle qu'illustrée Figure 5, l'unité de conditionnement 41 comprend à cet effet un amplificateur 43 à forte impédance d'entrée qui reçoit et amplifie les signaux émis par le transducteur 21, lesquels signaux amplifiés traversent ensuite un détecteur de seuil 44 qui cale à zéro le seuil de référence des signaux amplifiés, lesquels traversent ensuite un filtre passe-bande 45 pour être à nouveau amplifiés par un second amplificateur 46 puis filtrés par un second filtre passe-bande 47 (travaillant dans la même bande de fréquences que le filtre 45), avant d'être à nouveau amplifiés par un troisième amplificateur 48 puis redressés et transformés en créneaux rectangulaires par un circuit de mise en forme 49 avant d'être amplifiés une dernière fois par un amplificateur de sortie 50 destiné à stabiliser le signal.

En sortie de l'amplificateur 50, le signal traité est injecté au niveau d'une borne d'entrée 51 dans une unité d'acquisition 52 du signal du type analogique/numérique.

Cette unité analogique/numérique 52 reçoit également sur une borne d'entrée 53, les signaux électriques de mesure transmis par le capteur de pression amont 16 et éventuellement, sur une troisième bande d'entrée 54, les signaux transmis par le capteur de pression aval 17.

Une fois numérisés dans l'unité d'acquisition 52, les signaux émis par les différents capteurs sont transmis séquentiellement, de façon séparée, à un calculateur numérique 55 qui va délivrer en sortie, sur l'unité d'affichage 56, pour un différence de pressions donnée entre l'amont et l'aval du détendeur, la valeur du débit qui circule dans ce détendeur, en fonction d'un certain nombre de valeurs mesurées, ces valeurs ayant été stockées au cours d'essais menés préalablement à la mise en service opérationnelle du dispositif dans une unité mémoire 57 du calculateur 55.

Figure 5, on a représenté sous forme graphique, par un faisceau de courbes, les données qui sont stockées dans l'unité mémoire 57, le graphique en question comportant en abscisses les débits de fluide circulant à travers le détendeur et en ordonnées les valeurs établies en tension (par exemple entre 0 et + 5 volts) des signaux électriques fournis par les capteurs 11, 16 (et éventuellement 17), à l'entrée de l'unité d'acquisition 52.

A partir des Figures 4 et 5, on va maintenant présenter le principe du procédé utilisé dans l'invention pour permettre le calcul du débit de fluide s'écoulant dans une conduite.

Avant de pouvoir utiliser opérationnellement le système, il va falloir tout d'abord charger dans la mémoire 57 du calculateur 55, les données nécessaires au calcul.

Pour ce faire, on va, au cours d'une phase, d'essais, période , ou d'étalonnage, préalable à la mise en service, mesurer dans un premier temps, pour une différence de pressions constante entre l'amont et l'aval du détendeur considéré et pour diverses valeurs connues du débit de fluide à travers ce même détendeur, les valeurs des signaux électriques correspondants fournis par un capteur de vibrations, tel que le capteur 11, sensible aux vibrations du détendeur. On va ensuite répéter cette mesure pour différentes valeurs de la pression établie en amont du détendeur.

Si, dans une première approximation, on a supposé comme constante la pression en aval de ce détendeur, il suffira pour effectuer ces mesures d'utiliser un simple capteur, tel que le capteur 16 pour mesurer la pression en amont du détendeur. La valeur supposée constante de la pression en aval du détendeur sera alors entrée dans la mémoire 57 en tant que valeur de référence.

Par contre, si l'on désire prendre en considération la légère variation de pression en aval du détendeur qui peut survenir en exploitation, on utilisera alors par exemple les capteurs de pression amont/aval 16 et 17 qui fourniront à l'unité d'acquisition analogique/numérique 52 des signaux électriques correspondant à une différence de pression mesurée entre l'amont et l'aval du détendeur. Les signaux électriques correspondants numérisés seront alors entrés dans le calculateur 55, (voir Figure 4).

D'une façon générale, on notera que si les signaux électriques transmis par les capteurs de vibrations et de pression sont fournis en tension, un voltmètre pourra parfaitement permettre de relever les valeurs de ces signaux en sortie de l'unité 41 ou du capteur 16 (respectivement 17) de façon à pouvoir les sotcker dans la mémoire du calculateur.

En résumé, si l'on se réfère à la Figure 5, on va donc dans une première phase d'essais, pour un détendeur déterminé, à différents débits Q donnés de fluide, et pour une série de différences de pressions également déterminées et constantes Δpᵢ , mesurer les valeurs des signaux électriques, par exemple au moyen d'un voltmètre si ces signaux sont établis en tension, comme illustré à la Figure 5.

Une fois les données figurant la réprésentation graphique de la Figure 5 entrées dans l'unité mémoire 57 du calculateur, on va pouvoir rendre opérationnel le système.

A l'aide par exemple du dispositif illustré à la Figure 4, on va alors fournir à l'entrée du calculateur 55 des informations, (signaux électriques) correspondant à une pression prise en amont du détendeur 5 (ou à une différence de pressions entre l'amont et l'aval de ce même détendeur) et à une vibration engendrée par le fluide circulant dans ce détendeur, et ainsi obtenir, sur l'unité d'affichage 56, la valeur du débit de fluide en circulation, en fonction des données stockées en mémoire.

Et le calculateur va, à partir des données stockées dans sa mémoire 57, fournir à l'unité d'affichage 56, pour une tension U et pour une différence de pression Δpᵢ , la valeur du débit Q correspondant.

A cette étape de la description, on notera que la mesure du débit étant d'une façon générale étalonnée à une température de 0°C, si l'on désire encore affiner les résultats fournis, on peut prévoir de venir relever par un capteur supplémentaire 58 la température réelle du fluide circulant dans le détendeur.

Le signal du capteur de température 58 est alors injecté en 59 dans l'unité d'acquisition 52, après avoir traversé un amplificateur-conditionneur 60 spécifique de la température et bien connu de l'homme de l'art. Une fois numérisé, le signal correspondant est ensuite pris en compte par le calculateur 55.

Eventuellement, on pourrait même pour améliorer encore la précision des valeurs du débit fournies par le calculateur, entrer dans l'unité analogique/numérique 52, par une borne supplémentaire 61, les valeurs relevées par un capteur supplémentaire de pression 62 permettant de relever la pression atmosphérique réelle dans l'environnement du détendeur et ainsi permettre au calculateur de prendre en compte cette valeur supplémentaire de pression qui, d'une façon générale, est sinon établie à 1,013 bar.

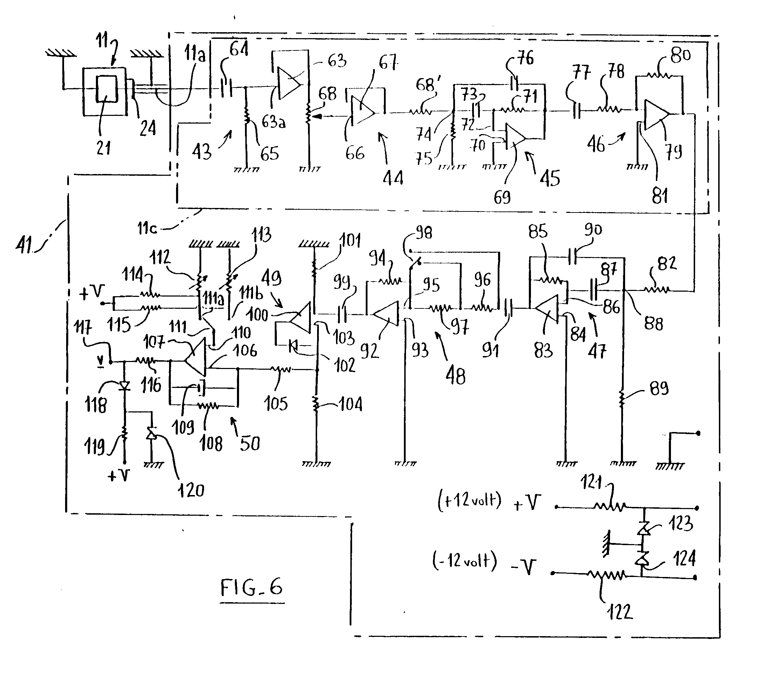

Reportons-nous maintenant à la Figure 6 où on a représenté le circuit électronique de l'unité de conditionnement 41.

De manière classique, l'amplificateur d'entrée 43 est formé par un amplificateur différentiel à contre-réaction dont une entrée 63 a est alimentée par les signaux émis par le transducteur 21, via une capacité 64, et mise à la masse à travers une résistance 65.

Une entrée 66 de l'amplificateur différentiel 67 à contre-réaction du détecteur de seuil 44 reçoit le signal issu de la sortie de l'amplificateur 63 via un potentiomètre 68 relié à la masse. La sortie de l'amplificateur différentiel 67 traverse une résistance 68′ pour aboutir au premier filtre passe-bande 45 qui, de préférence et comme on l'a dit, laissera passer une bande de fréquences comprise entre environ 15 et 25 kHertz.

Le filtre 45 comprend un amplificateur différentiel 69 dont une entrée 70 est mise à la masse et qui est pourvue d'une boucle de contre réaction comprenant une résistance 71 reliant la sortie à la seconde entrée 72 de l'amplificateur, le condensateur 73 reliant en série cette seconde entrée à la sortie de l'amplificateur 67, via la résistance 68′, leur point intermédiaire 74 étant mis à la masse par la résistance 75 et étant connecté à la sortie de l'amplificateur 69 par un condensateur 76.

La sortie du filtre 45 traverse un condensateur 77 de liaison et une résistance 78 pour aboutir à la première entrée d'un amplificateur différentiel 79 qui est monté comme second amplificateur 46, est pourvu de sa résistance de contre- réaction 80 et est mis à la masse par sa seconde entrée 81.

On notera que cette première partie de circuit électronique formant préamplificateur est blindée contre les parasites radio-électriques par une boîte métallique 11c.

La sortie du second amplificateur 46 attaque, à travers une résistance 82 le second filtre passe-bandes 47. Ce second filtre se compose, à l'image du premier, d'un amplificateur différentiel 83 dont une entrée 84 est mise à la masse et qui est pourvu d'une boucle de contre réaction comprenant une résistance 85 reliant la sortie à la seconde entrée 86 de l'amplificateur 83, le condensateur 87 reliant en série cette seconde entrée à la sortie du second amplificateur 46, via la résistance 82, leur point intermédiaire 88 étant mis à la masse par la résistance 89 et étant connecté à la sortie de l'amplificateur 83 par un condensateur 90.

La sortie du second filtre 47 attaque, à travers un condensateur 91, le troisième amplificateur 48. Cet amplificateur 48 se compose d'un amplificateur différentiel 92 dont une entrée 93 est reliée à la masse et qui est pourvue de sa résistance 94 de contre réaction bouclée sur sa seconde entrée 95, laquelle est reliée en série au condensateur 91 via les résistances 96 et 97, un relais double 98 branché, suivant sa position, aux bornes de la résistance 96 ou aux bornes de la résistance 97 permettant de faire varier le gain de l'amplificateur 48, par exemple d'un facteur 10.

En sortie, le signal issu de l'amplificateur 48 attaque, via un condensateur 99, le circuit 49 de mise en forme, c'est-à-dire de redressement, du signal.

Le circuit 49 se compose d'un amplificateur différentiel 100 dont une entrée, reliée au condensateur 99, est connectée à la masse par une résistance 101 et dont la sortie et la seconde entrée sont reliées par une boucle de contre-réaction comprenant une diode 102, cathode vers la sortie. La seconde entrée 103 de l'amplificateur 100 est mise à la masse par une résistance 104.

Issu de l'amplificateur 100, le signal attaque, par une résistance 105, l'entrée 106 d'un amplificateur différentiel 107 appartenant au quatrième amplificateur, ou amplificateur de sortie, 50 lequel est destiné à adapter l'impédance de sortie et à stabiliser le signal.

L'amplificateur différentiel 107 est pourvu d'une boucle de contre-réaction entre sa première entrée 106 et sa sortie, avec une résistance 108 et, en parallèle, un condensateur 109.

La seconde entrée 110 de l'amplificateur différentiel 107 est reliée à la masse par l'intermédiaire d'un relais 111 et, suivant la position de ce relais, d'une résistance 112 ou d'une résistance 113, toutes deux variables. Les bornes de sortie 111a, 111b du relais 111 et les résistances 112 et 113, respectivement, sont, en outre, connectées à la tension d'alimentation +V, par l'intermédiaire des résistances 114 et 115 respectivement. Ce double pont potentiométrique sert en fait à caler le zéro de la tension de sortie, dans certains cas particuliers où le système est soumis à des bruits de fond intenses.

Quant à la sortie de l'amplificateur 107, elle délivre, par l'intermédiaire d'une résistance 116, un signal de tension v que l'on désire en général voir établi à une tension stabilisée comprise entre 0 et + 5 volts.

Entre la sortie 117 du signal et la résistance 116, est par ailleurs branchée l'anode d'une diode 118 dont la cathode est connectée à la tension d'alimentation + V, à travers une résistance 119, une diode Zener 120 reliée à la masse étant connectée entre la cathode de la diode 118 et la résistance 119.

En ce qui concerne l'alimentation du circuit électronique qui vient d'être décrit et l'injection du signal, ce circuit étant tout à fait classique, il ne semble pas nécessaire de le décrire en détail, étant simplement précisé qu'il comprend les résistances 121 et 122 connectées entre-elles par deux diodes Zener 123 et 124 reliées à la masse au niveau de leur point intermédiaire de liaison 125.

Bien entendu, l'invention ne se limite pas strictement aux modes de réalisation qui ont été plus spécifiquement décrits ci-dessus.

Il doit être en particulier clair que, pour la mise en oeuvre du procédé de l'invention, on aurait pu envisager d'utiliser un autre type de capteur de vibrations que le capteur 11 que l'on a décrit. Un microphone ou une sonde acoustique correctement connecté à l'unité de conditionnement 41 aurait par exemple pu être utilisé. Il aurait alors suffi que ce nouveau capteur soit disposé au voisinage du détendeur de manière à être convenablement réceptif aux ondes vibratoires émises par ce détendeur. Une liaison mécanique avec le détendeur ne serait donc dans ce cas plus nécessaire. On notera encore que si on utilise effectivement le capteur 11 de vibrations, son montage à l'extérieur sur la paroi de la bride aval 5a du détendeur 5 ne constitue bien entendu pas la seule possibilité de montage. En fait il suffit que le capteur 11 soit disposé de telle manière qu'il soit réceptif aux vibrations du détendeur. Dans ces conditions, un montage à l'extérieur sur la bride "amont", ou encore sur l'une des conduites amont ou aval, à proximité du détendeur, pourrait tout à fait être retenu.

Par ailleurs, on comprendra aisément que l'on pourrait utiliser, au lieu des capteurs de pression amont/aval 16, 17, directement un capteur de pression différentiel bien connu de l'homme de l'art.

Egalement on pourrait tout à fait utiliser l'invention pour indiquer le débit de fluides compressibles autres que du gaz combustible, tels que de la vapeur d'eau sous pression.

## Revendications

1. Dispositif indicateur du débit d'un fluide compressible, notamment d'un gaz combustible, s'écoulant dans une conduite, laquelle est équipée d'un détendeur (5), ce dispositif comprenant :
- un capteur (11) de vibrations avec un transducteur (21), par exemple du type piézo-électrique, adapté pour transmettre des signaux électriques correspondant aux vibrations reçues, le capteur (11) de vibration étant disposé à proximité du détendeur (5) aux vibrations duquel il est sensible, de manière à en capter les ondes vibratoires,
- un capteur (16) de pression disposé sur la conduite et adapté pour transmettre des signaux électriques correspondant à la pression mesurée, le capteur (16) de pression étant disposé en amont dudit détendeur,
- une unité (52) analogique/numérique reliée auxdits capteurs (11, 16) de vibrations et de pression, pour acquérir les signaux qu'ils transmettent,
- et un calculateur numérique (55) relié à l'unité analogique/numérique (52) pour recevoir ses données et indiquer en sortie le débit correspondant de fluide, caractérisé en ce que,
a) - le dispositif comprend en outre :
. une unité (41) de conditionnement des signaux transmis par le transducteur (21), cette unité comprenant au moins un amplificateur (43, 46, 48, 50), un détecteur de seuil (44) pour caler le zéro du seuil de référence desdits signaux, au moins un filtre passe-bande (45, 47) et un circuit (49) formant redresseur de mise en forme de ces signaux,
. et des moyens mémoire (57) adaptés de façon à stocker lors d'une phase d'étalonnage et à fournir ultérieurement au calculateur (55) des données de référence correspondant à des valeurs de signaux électriques représentatives de vibrations émises par le détendeur (5), en fonction de valeurs prédéterminées de débit de fluide et de différence de pression entre l'amont et l'aval de ce détendeur, à pression aval supposée constante,
b) - et le calculateur numérique (55) indique, en fonction des données stockées dans lesdits moyens mémoire (57), le débit de fluide correspondant à des valeurs de vibration et de pression amont relevées à un moment donné par les capteurs respectifs (11, 16), ceci à pression en aval du détendeur supposée constante et donc pour une différence de pression donnée entre l'amont et l'aval de ce même détendeur.

2. Dispositif indicateur du débit d'un fluide compressible, notamment d'un gaz combustible, s'écoulant dans une conduite, laquelle est equipée d'un détendeur (5), ce dispositif comprenant :
- un capteur (11) de vibrations avec un transducteur (21), par exemple du type piézo-électrique, adapté pour transmettre des signaux électriques correspondant aux vibrations reçues, le capteur (11) de vibrations étant disposé à proximité de détendeur (5) aux vibrations duquel il est sensible de manière à en capter les ondes vibratoires,
- un capteur (16, 17) de pression disposé en amont dudit détendeur sur la conduite et adapté pour transmettre des signaux électriques correspondant à la pression mesurée,
- une unité (52) analogique/numérique reliée auxdits capteurs (11, 16) de vibrations et de pression, pour acquérir les signaux qu'ils transmettent,
- et un calculateur numérique (55) relié à l'unité analogique/numérique (52) pour recevoir ses données et indiquer en sortie le débit correspondant de fluide, caractérisé en ce que,
a) - le dispositif comprend en outre :
. une unité (41) de conditionnement des signaux transmis par le transducteur (21), cette unité comprenant au moins un amplificateur (43, 46, 48, 50), un détecteur de seuil (44) pour caler le zéro du seuil de référence desdits signaux, au moins un filtre passe-bande (45, 47) et un circuit (49) formant redresseur de mise en forme de ces signaux,
. et des moyens mémoire (57) adaptés de façon à stocker lors d'une phase d'étalonnage et à fournir au calculateur (55) des données de référence correspondant à des valeurs de signaux électriques représentatives de vibrations émises par le détendeur (5), en fonction de valeurs prédéterminées de débit de fluide et de différence de pressions entre l'amont et l'aval de ce détendeur,
b) - un autre capteur de pression, disposé en aval du détendeur, lesdits capteurs (16, 17) de pression constituent un capteur de pressions différentielles pour obtenir la différence des pressions entre l'amont et l'aval dudit détendeur (5),
c) - et le calculateur numérique (55) indique en fonction des données stockées dans les moyens mémoire (57), le débit de fluide correspondant à des valeurs de vibration et de différence de pressions amont/aval relevées à un moment donné par les capteurs respectifs (11 ; 16; 17).

3. Dispositif selon l'une des revendications 1 ou 2 caractérisé en ce que l'unité de conditionnement (41) comprend successivement un amplificateur d'entrée (43) recevant le signal émis par le transducteur (21) ; le détecteur de seuil (44) ; un premier filtre passe-bande (45) ; un second amplificateur (46) ; un second filtre passe-bande (47) ; un troisième amplificateur (48) ; le circuit (49) de mise en forme et un amplificateur de sortie (50), les premier et second filtres passe-bande (45, 47) travaillant dans une bande de fréquences comprise entre 15 et 25 KHertz environ.

4. Dispositif indicateur selon l'une quelconque des revendications précédentes caractérisé en ce que ledit capteur de vibrations (11) comprend :
- un corps (20) métallique électriquement conducteur, en forme de manchon pour le logement du transducteur (21),
- une tête (18) avec un prolongement (19) s'étendant partiellement à l'intérieur dudit corps, cette tête (18) pouvant être mécaniquement reliée audit détendeur (5) ou à une paroi extérieure de ladite conduite (14, 15) où circule le fluide, pour être sensible aux vibrations émises par ce détendeur, ledit prolongement (19) de cette tête étant élastiquement et électriquement isolé du corps (20),
- le transducteur (21) qui est relié mécaniquement à ladite tête (18) et électriquement audit corps (20),
- une masselotte (22) électriquement conductrice reliée mécaniquement au transducteur (21) pour absorber les vibrations émises par le détendeur (5) lorsque la fréquence de ses vibrations est inférieure à une valeur prédéterminée, la masselotte étant isolée mécaniquement du corps (20),
- et une borne de sortie (24) électriquement connectée à la masselotte (22).

5. Dispositif selon la revendication 4 caractérisé en ce que le capteur (11) de vibrations est fixé à l'extérieur du détendeur (5) par sa tête (18), laquelle se présente sous la forme d'un anneau avec un orifice central (18c) propre à s'adapter sur une bride du détendeur (5) et comportant deux faces (18a, 18b) opposées planes.

6. Procédé pour déterminer le débit d'un fluide compressible à travers une conduite, ladite conduite étant pourvue d'un détendeur (5) pour le fluide considéré émettant des vibrations lorsque ledit fluide circule à travers, dans lequel procédé, :
a) on place un capteur de vibrations (11) de manière qu'il soit sensible aux vibrations émises par le détendeur (5),
b) on place un capteur de pression (16) pour qu'il détecte la pression du fluide circulant dans la conduite en amont du détendeur,
c) les vibrations captées par ledit capteur de vibrations et ladite pression amont captée par le capteur de pression étant converties respectivement en signaux électriques,
ledit procédé comprenant des étapes d'étalonnage dans lesquelles :
d) on enregistre le signal correspondant aux vibrations captées pour une différence de pression déterminée entre l'amont et l'aval dudit détendeur (5) et pour un débit de fluide déterminé s'y écoulant,
e) on répète l'étape d) pour différents débits de fluide et pour différentes pressions en amont du détendeur, la pression en aval de ce même détendeur étant supposée sensiblement constante,
f) on stocke au fur et à mesure dans une unité mémoire (57), des données représentatives des variations de vibrations captées, en fonction des différences de pression amont/aval et des débits de fluide successifs, ce procédé comprenant, après ces étapes d'étalonnage, les étapes opérationnelles suivantes au cours desquelles :
g) on enregistre des signaux électriques de pression et de vibrations fournis par lesdits capteurs de pression (16) et de vibrations (11), respectivement,
h) et on corrèle ces signaux avec le débit de fluide à déterminer, en fonction desdites données stockées dans l'unité mémoire (57).

7. Procédé pour déterminer le débit d'un fluide compressible à travers une conduite, laquelle est pourvue d'un détendeur (5) pour le fluide considéré émettant des vibrations lorsque ledit fluide circule à travers, ce procédé étant tel que :
a) on place un capteur de vibrations (11) de manière qu'il soit sensible aux vibrations émises par le détendeur (5),
b) on place un capteur de pression différentielle (16, 17) pour capter la pression dudit fluide en amont et en aval du détendeur (5) et pour obtenir la différence entre ces pressions,
c) lesdites vibrations captées par le capteur de vibrations (11) et lesdites différences de pression obtenues dudit capteur (16, 17) de pression différentielle étant converties respectivement en signaux électriques, ce procédé comprenant les étapes d'étalonnage suivantes, au cours desquelles :
d) on enregistre le signal correspondant aux vibrations captées pour une différence de pression déterminée entre l'amont et l'aval dudit détendeur (5) et pour un débit de fluide déterminé s'y écoulant,
e) on répète l'étape d) pour différents débits de fluide et pour différentes différences de pression entre l'amont et l'aval dudit détendeur,
f) on stocke au fur et à mesure, dans une unité mémoire (57), des données représentatives des variations de vibrations captées, en fonction des différences de pression et débits successifs,
ce procédé comprenant, après ces étapes d'étalonnage, les étapes opérationnelles suivantes, au cours desquelles :
g) on enregistre des signaux électriques de pression et de vibrations fournis par ledit capteur de pression différentielle (16, 17) et ledit capteur de vibrations (11), respectivement,
h) et on corrèle cesdits signaux avec le débit de fluide à déterminer, en fonction desdites données stockées dans l'unité de mémoire (57).

8. Procédé selon la revendication 6 ou la revendication 7 caractérisé en ce qu'il comprend en outre les étapes suivantes dans lesquelles, entre les étapes précitées c) et d) :
- on amplifie les signaux électriques correspondant auxdites vibrations captées par le capteur de vibrations (11),
- on cale le zéro du seuil de référence de ce signal,
- on fait passer ce même signal à travers un filtre passe-bande (45),
- et on redresse ledit signal filtré.

## Claims

1. Device for indicating the flow rate of a compressible fluid, in particular a combustible gas flowing in a duct which is provided with a pressure-reducing valve (5), this device comprising:
- a vibration sensor (11) with a transducer (21), for example of the piezo-electric type, suitable for transmitting electrical signals corresponding to the vibrations received, the vibration sensor (11) being disposed in the vicinity of the pressure-reducing valve (5), to the vibrations of which it is sensitive, such that it picks up the vibratory waves thereof;
- a pressure sensor (16) which is disposed on the duct, and is suitable for transmitting electrical signals corresponding to the pressure measured, the pressure sensor (16) being disposed upstream of the said pressure-reducing valve;
- an analogue/digital unit (52) connected to the said vibration and pressure sensors (11, 16), for gathering the signals they transmit; and
- a digital computer (55) connected to the analogue/digital unit (52), for receiving the data thereof and indicating as output the corresponding fluid flow rate, characterised in that:
a) - the device additionally comprises:
. a unit (41) for conditioning signals transmitted by the transducer (21), this unit comprising at least one amplifier (43, 46, 48, 50), a threshold detector (44) for adjusting the reference threshold zero of the said signals, at least one bandpass filter (45, 47), and a circuit (49) forming a rectifier for the signals; and
. memory means (57) suitable for storage during an adjustment phase and subsequent transmission to the computer (55), of reference data which correspond to electrical signal values representative of vibrations emitted by the pressure-reducing valve (5), in accordance with predetermined values of fluid flow rate and pressure difference between the upstream and downstream sides of this pressure-reducing valve, the downstream pressure being assumed to be constant; and
b) - in accordance with the data stored in the said memory means (57), the digital computer (55) displays the fluid flow rate which corresponds to intake vibration and pressure values measured at a specific moment by the respective sensors (11, 16), at a pressure-reducing valve upstream pressure which is assumed to be constant, and thus for a specific pressure difference between the upstream and downstream sides of this pressure-reducing valve.

2. Device for indicating the flow rate of a compressible fluid, in particular a combustible gas flowing in a duct which is provided with a pressure-reducing valve (5), this device comprising:
- a vibration sensor (11) with a transducer (21), for example of the piezo-electric type, suitable for transmitting electrical signals corresponding to the vibrations received, the vibration sensor (11) being disposed in the vicinity of the pressure-reducing valve (5), to the vibrations of which it is sensitive, such that it picks up the vibratory waves thereof;
- a pressure sensor (16, 17) which is disposed upstream of the said pressure-reducing valve, on the duct, and is suitable for transmitting electrical signals corresponding to the pressure measured;
- an analogue/digital unit 52 connected to the said vibration and pressure sensors (11, 16), for gathering the signals they transmit; and
- a digital computer (55) connected to the analogue/digital unit (52), for receiving the data thereof and displaying as output the corresponding fluid flow rate, characterised in that:
a) - the device additionally comprises:
. a unit (41) for conditioning the signals transmitted by the transducer (21), this unit comprising at least one amplifier (43, 46, 48, 50), a threshold detector (44) for adjusting the reference threshold zero of the said signals, at least one bandpass filter (45, 47) and a circuit (49) forming a rectifier for these signals; and
. memory means (57) suitable for storing during an adjustment phase and supplying to the computer (55) reference data which correspond to electric signals representative of vibrations emitted by the pressure-reducing valve (5), in accordance with predetermined values of fluid flow rate and pressure difference between the upstream and downstream sides of this pressure-reducing valve;
b) - another pressure sensor, disposed on the downstream side of the pressure-reducing valve, the said pressure sensors (16, 17) constituting a differential pressure sensor for obtaining the pressure differences between the upstream and downstream sides of the said pressure-reducing valve (5); and
c) - in accordance with the data stored in the memory means (57), the digital computer (55) displays the fluid flow rate corresponding to values of vibration and upstream/downstream pressure difference measured at a specific moment by the respective sensors (11, 16, 17).

3. Device according to either of claims 1 and 2, characterised in that the conditioning unit (41) comprises in succession an input amplifier (43) for receiving the signal emitted by the transducer (21); the threshold detector (44); a first bandpass filter (45); a second amplifier (46); a second bandpass filter (47); a third amplifier (48); the rectifying circuit (49) and an output amplifier (50), the first and second bandpass filters (45, 47) operating in a frequency band of between approximately 15 and 25 KHertz.

4. Display device according to any one of the preceding claims, characterised in that the said vibration sensor (11) comprises:
- an electrically conductive metal body (20), in the form of a sleeve for accommodating the transducer (21);
- a head (18) with an extension (19) which extends partially inside the said body, this head (18) being mechanically connectable to the said pressure-reducing valve (5) or to an outer wall of the said duct (14, 15) in which the fluid flows, such that it is sensitive to the vibrations emitted by this pressure-reducing valve, the said extension (19) of this head being resiliently and electrically insulated from the body (20);
- the transducer (21) which is connected mechanically to the said head (18) and electrically to the said body (20);
- an electrically conductive feeder head (22) which is connected mechanically to the transducer (21), for absorbing the vibrations emitted by the pressure-reducing valve (5) when the frequency of its vibrations is lower than a predetermined value, the feeder head being isolated mechanically from the body (20); and
- an output terminal (24) which is connected electrically to the feeder head (22).

5. Device according to claim 4, characterised in that the vibration sensor (11) is attached to the outside of the pressure-reducing valve (5) by its head (18), which is in the form of a ring with a central aperture (18c) suitable for being fitted to a flange of the pressure-reducing valve (5), and comprises two opposite flat surfaces (18a, 18b).

6. Method for determining the flow rate of a compressible fluid through a duct, the said duct being provided with a pressure-reducing valve (5) for the fluid in question, which emits vibrations when the said fluid is flowing through, according to which method:
a) a vibration sensor (11) is positioned such that it is sensitive to the vibrations emitted by the pressure-reducing valve (5);
b) a pressure sensor (16) is positioned such that it detects the pressure of the fluid flowing in the duct upstream of the pressure-reducing valve;
c) the vibrations picked up by the said vibration sensor and the said upstream pressure picked up by the pressure sensor being converted respectively into electrical signals, the said method comprising adjustment stages in which:
d) the signal is recorded which corresponds to the vibrations picked up for a specific pressure difference between the upstream and downstream sides of the said pressure-reducing valve (5), and for a specific fluid flow rate flowing therein;
e) stage d) is repeated for various fluid flow rates and for various upstream pressures of the pressure-reducing valve, the downstream pressure of this same pressure-reducing valve being assumed to be substantially constant;
f) data representative of vibration variations picked up, in accordance with upstream/downstream pressure differences and successive fluid flow rates, are stored progressively in a memory unit (57), this method comprising, after the adjustment stages, the following operational stages in which:
g) the electrical pressure and vibration signals provided by the said pressure sensors (16) and vibration sensors (11) respectively are recorded; and
h) these signals are correlated with the fluid flow rate to be determined, in accordance with the said data stored in the memory unit (57).

7. Method for determining the flow rate of a compressible fluid through a duct, which is provided with a pressure-reducing valve (5) for the fluid in question, and emits vibrations when the said fluid is flowing through, this method being such that:
a) a vibration sensor (11) is positioned such that it is sensitive to the vibrations emitted by the pressure-reducing valve (5);
b) a differential pressure sensor (16, 17) is positioned such that it picks up the pressure of the said fluid upstream and downstream of the pressure-reducing valve, and in order to obtain the difference between these pressures;
c) the said vibrations picked up by the vibration sensor (11) and the said pressure differences obtained from the said differential pressure sensor (16, 17) being converted respectively into electrical signals, this method comprising the following adjustment stages, in which:
d) the signal corresponding to the vibrations picked up for a specific pressure difference between the upstream and downstream sides of the said pressure-reducing valves (5) and for a specific fluid flow rate flowing therein is recorded;
e) stage d) is repeated for various fluid flow rates and for various pressure differences between the upstream and downstream sides of the said pressure-reducing valve;
f) the data representing the variations of vibrations picked up, in accordance with successive pressure and flow rate differences, are stored progressively in a memory unit (57), this method comprising after these adjustment stages, the following operational stages in which:
g) electrical pressure and vibration signals provided by the said differential pressure sensor (16, 17), and the said vibration sensor (11) respectively are recorded; and
h) the said signals are correlated with the fluid flow rate to be determined, in accordance with the said data stored in the storage unit (57).

8. Method according to claim 6 or claim 7, characterised in that it additionally comprises the following stages, in which, between the above-described stages c) and d):
- the electrical signals which correspond to the said vibrations picked up by the vibration sensor (11) are amplified;
- the reference threshold zero of this signal is adjusted;
- this signal is passed through a bandpass filter (45); and
- the said filtered signal is rectified.

## Patentansprüche

1. Vorrichtung zur Anzeige des Durchsatzes eines kompressiblen Fließmittels, insbesondere eines brennbaren Gases, welches in einer Leitung fließt, die mit einem Druckminderer (5) ausgestattet ist, wobei diese Vorrichtung aufweist:
- einen Fühler (11) für die Schwingungen mit einem Wandler (21), z.B. vom piezoelektrischen Typ, der geeignet ist, elektrische Signale, welche den empfangenen Schwingungen entsprechen, zu übertragen, wobei der Fühler (11) für die Schwingung in der Nähe des Druckminderers (5) angeordnet ist, auf dessen Schwingungen er empfindlich ist, derart, daß er davon die Schwingungswellen aufnimmt,
- einen Druckfühler (16), der an der Leitung angeordnet und geeignet ist, elektrische Signale zu übertragen, welche dem gemessenen Druck entsprechen, wobei der Druckfühler (16) aufstromig vom Druckminderer angeordnet ist,
- eine analoge/numerische Einheit (52), die mit den Schwingungs- und Druckfühlern (11, 16) verbunden ist, um die Signale zu erfassen, die sie übertragen,
- und einen numerischen Rechner (55), der mit der analogen/numerischen Einheit (52) verbunden ist, um seine Daten zu empfangen und am Ausgang den Durchsatz anzuzeigen, welcher dem Fließmittel entspricht,
dadurch gekennzeichnet, daß
a) - die Vorrichtung ferner aufweist:
. eine Einheit (41) für das Konditionieren der Signale, welche durch den Wandler (21) übertragen werden, wobei diese Einheit mindestens einen Verstärker (43,46,48,50), einen Schwellenwertdetektor (44), um den Bezugsschwellen-Nullwert dieser Signale festzusetzen, mindestens einen Bandpaßfilter (45, 47) und einen Schaltkreis (49) aufweist, welcher den Gleichrichter für diese Signale bildet,
. und Speichermittel (57), die geeignet sind, während einer Eichphase Bezugsdaten zu speichern und später dem Rechner (55) zu liefern, welche den Werten der elektrischen Signale entsprechen, die für die vom Druckminderer (5) ausgesandten Schwingungen repräsentativ sind, in Funktion der vorbestimmten Werte des Fließmitteldurchsatzes und der Druckdifferenz zwischen aufstromig und abstromig von diesem Druckminderer bei angenommenem konstanten abstromigem Druck,
b) - und der numerische Rechner (55) in Funktion der in diesen Speichermitteln (57) gespeicherten Daten den Fließmitteldurchsatz anzeigt, der den Schwingungs- und Druckwerten entspricht, die bei einem durch die jeweiligen Fühler (11, 16) gegebenen Zeitpunkt aufstromig erhöht werden, dies bei einem als konstant vorausgesetzten Druck abstromig vom Druckminderer und also für eine Druckdifferenz, die zwischen aufstromig und abstromig von demselben Druckminderer gegeben ist.

2. Anzeigevorrichtung für den Durchsatz eines kompressiblen Fließmittels, insbesondere eines brennbaren Gases, welches in einer Leitung fließt, welche mit einem Druckminderer (5) ausgestattet ist, wobei diese Vorrichtung aufweist:
- einen Vibrationsfühler (11) mit einem Wandler (21), z.B. vom piezoelektrischen Typ, der dazu geeignet ist, elektrische Signale zu übertragen, die den empfangenen Schwingungen entsprechen, wobei der Fühler (11) für die Schwingungen in der Nähe des Druckminderers (5), für dessen Schwingungen er empfindlich ist derart angeordnet ist, daß er von diesem die Schwingungswellen aufnehmen kann
- einen Druckfühler (16, 17), der aufstromig von dem Druckminderer an der Leitung angeordnet und geeignet ist, die elektrischen Signale, die dem gemessenen Druck entsprechen, zu übertragen,
- eine analoge/numerische Einheit (52), die mit diesen Schwingungs- und Druckfühlern (11, 16) verbunden ist, um die Signale zu erfassen, die sie übertragen,
- und einen numerischen Rechner (55), der mit der analogen/numerischen Einheit (52) verbunden ist, um seine Daten zu empfangen und am Ausgang den entsprechenden Fließmitteldurchsatz anzuzeigen, dadurch gekennzeichnet, daß
a) - die Vorrichtung ferner aufweist:
. eine Konditionierungseinheit (41) für die durch den Wandler (21) übertragenen Signale, wobei diese Einheit mindestens einen Verstärker (43, 46, 48, 50) aufweist, einen Schwellenwertdetektor (44), um den Bezugsschwellen-Nullwert dieser Signale festzusetzen, mindestens einen Bandpaßfilter (45, 47) und eine Schaltung (49) aufweist, die den Gleichrichter bildet, der diese Signale formt,
. und Speichermittel (57), die dazu geeignet sind, während einer Eichphase Bezugsdaten zu speichern und dem Rechner (55) zu liefern, die den Werten der elektrischen Signale entsprechen, die für die Schwingungen repräsentativ sind, welche durch den Druckminderer (5) ausgesandt werden, in Funktion der vorbestimmten Werte des Fließmitteldurchsatzes und der Differenz der Drücke zwischen aufstromig und abstromig von diesem Druckminderer, wobei ein anderer Druckfühler abstromig von dem Druckminderer angeordnet ist,
b) - die genannten Druckfühler (16, 17) bilden einen Fühler für die Differentialdrücke, um die Differenz der Drücke zwischen aufstromig und abstromig dieses Druckminderers (5) zu erhalten,
c) - und der numerische Rechner (55) in Funktion der in den Speichermitteln (57) gespeicherten Daten den Fließmitteldurchsatz anzeigt, der den Schwingungswerten und der Differenz der Drücke entspricht, die aufstromig/abstromig zu einem Zeitpunkt erhöht werden, der durch die jeweiligen Fühler (11; 16; 17) gegeben wird.

3. Vorrichtung nach einem der Ansprüche 1 oder 2, dadurch gekennzeichnet, daß die Konditionierungseinheit (41) nacheinander einen Eingangsverstärker (43) der das durch den Wandler (21) abgegebene Signal empfängt; den Schwellenwertdetektor (44); einen ersten Bandpaßfilter (45); einen zweiten Verstärker (46); einen zweiten Bandpaßfilter (47); einen dritten Verstärker (48); den Schaltkreis (49) für das Formen und einen Ausgangsverstärker (50) aufweist, wobei die ersten und zweiten Bandpaßfilter (45, 47) in einem Frequenzbereich arbeiten, der ungefähr zwischen 15 und 25 KHertz liegt.

4. Anzeigevorrichtung nach einem der vorangegangenen Ansprüche, dadurch gekennzeichnet, daß der Schwingungsfühler (11) aufweist:
- einen elektrisch leitenden metallischen Körper (20), in Form einer Muffe für die Aufnahme des Wandlers (21),
- einen Kopf (18) mit einer Verlängerung (19), die sich teilweise in das Innere dieses Körpers erstreckt, wobei dieser Kopf (18) mechanisch mit dem Druckminderer (5) oder mit einer Außenwand der genannten Leitung (14, 15), in der das Fließmittel zirkuliert, verbunden werden kann, wobei die Verlängerung (19) dieses Kopfes elastisch und elektrisch vom Körper (20) isoliert ist, um für die durch den Druckminderer ausgesandten Schwingungen empfindlich sein zu können,
- den Wandler (21), der mechanisch mit diesem Kopf (18) und elektrisch mit dem Körper (20) verbunden ist,
- einen elektrisch leitenden verlorenen Kopf (22), der mechanisch mit dem Wandler (21) verbunden ist, um die von dem Druckminderer (5) ausgesandten Schwingungen zu adsorbieren, wenn die Frequenz seiner Schwingungen unterhalb eines vorbestimmten Wertes liegt, wobei der verlorene Kopf mechanisch von dem Körper (20) isoliert ist,
- und eine Ausgangsanschlußklemme (24), die elektrisch mit dem verlorenen Kopf (22) verbunden ist.

5. Vorrichtung nach Anspruch 4, dadurch gekennzeichnet, daß der Schwingungsfühler (11) durch seinen Kopf (18) außerhalb des Druckminderers befestigt ist, wobei der Kopf die Form eines Ringes mit einer zentralen Öffnung (18c) hat, die geeignet ist, sich auf einem Flansch des Druckminderers (5) anzupassen, und zwei ebene gegenüberliegende Seiten (18a, 18b) aufweist.

6. Verfahren für die Bestimmung des Durchsatzes eines kompressiblen Fließmittels durch eine Leitung, wobei diese Leitung mit einem Druckminderer (5) für das betrachtete Fließmittel versehen ist, welcher Schwingungen aussendet, während das Fließmittel hindurchläuft, in welchem Verfahren, :
a) man einen Schwingungsfühler (11) derart anbringt, daß er für die durch den Druckminderer (5) ausgesandten Schwingungen empfindlich ist,
b) man einen Druckfühler (16) anordnet, damit er den Druck des Fließmittels erfaßt, welches in der Leitung aufstromig von dem Druckminderer zirkuliert,
c) wobei die durch den Schwingungsfühler aufgenommenen Schwingungen bzw. der durch den Druckfühler aufgenommene aufstromige Druck in elektrische Signale umgewandelt wird, wobei dieses Verfahren Eichstufen aufweist, in welchen:
d) man das Signal registriert, welches den Schwingungen entspricht, die für eine vorbestimmte Druckdifferenz zwischen aufstromig und abstromig vom Druckminderer (5) und für einen vorbestimmten Fließmitteldurchsatz, welcher dort fließt, erfaßt wurden,
e) man den Schritt d) für verschiedene Fließmitteldurchsätze und für verschiedene Drücke aufstromig vom Druckminderer wiederholt, wobei der Druck abstromig von diesem selben Druckminderer im wesentlichen konstant angenommen wird,
f) man entsprechend in einer Speichereinheit (57) für die Schwingungsschwankungen repräsentative Daten speichert, die in Funktion der Unterschiede des aufstromigen/abstromigen Druckes und der aufeinanderfolgenden Fließmitteldurchsätze erfaßt wurden, wobei dieses Verfahren nach diesen Eichschritten, die folgenden Tätigkeitsschritte aufweist, in deren Verlauf:
g) man elektrische Druck- und Schwingungssignale registriert, die durch die Druckfühler (16) bzw. Vibrationsfühler (11) geliefert werden,
h) und man diese Signale mit dem zu bestimmenden Fließmitteldurchsatz in Korrelation bringt, in Funktion der in der Speichereinheit (57) gespeicherten Daten.

7. Verfahren zum Bestimmen des Durchsatzes eines kompressiblen Fließmittels durch eine Leitung, welche mit einem Druckminderer (5) für das betrachtete Fließmittel versehen ist, welcher, während das Fließmittel hindurchläuft, Schwingungen emitiert, wobei das Verfahren wie folgt ist:
a) man einen Schwingungsfühler (11) derart anbringt, daß er für die durch den Druckminderer (5) emitierten Schwingungen empfindlich ist,
b) man einen Fühler für den Differentialdruck (16, 17) anordnet, um den Druck dieses Fließmittels aufstromig und abstromig von dem Druckminderer (5) zu erfassen und um die Differenz zwischen diesen Drücken zu erhalten,
c) wobei die durch den Schwingungsfühler (11) erfaßten Schwingungen bzw. die von dem Fühler (16, 17) für den Differentialdruck erhaltenen Druckdifferenzen in elektrische Signale umgewandelt werden, wobei dieses Verfahren die folgenden Eichschritte aufweist, im Verlaufe welcher:
d) man das Signal registriert, welches den Schwingungen entspricht, die für eine Differenz des vorbestimmten Druckes zwischen aufstromig und abstromig des Druckminderers (5) und für einen vorbestimmten Fließmitteldurchsatz, welcher dort fließt, erfaßt wurden,
e) man den Schritt d) für verschiedene Fließmitteldurchsätze und für verschiedene Druckdifferenzen zwischen aufstromig und abstromig vom Druckminderer wiederholt,
f) man entsprechend in einer Speichereinheit (57) Daten speichert, die für die Schwingungsschwankungen repräsentativ sind, welche in Funktion der Druckdifferenzen und aufeinanderfolgenden Durchsätze erfaßt wurden, wobei dieses Verfahren nach diesen Eichschritten die folgenden Tätigkeitsschritte aufweist, in deren Verlauf:
g) man elektrische Druck- und Schwingungssignale registriert, die durch den Differentialdruckfühler (16, 17) bzw. den Schwingungsfühler (11) geliefert wurden,
h) und man diese Signale mit dem zu bestimmenden Fließmitteldurchsatz in Funktion der in der Speichereinheit (57) gespeicherten Daten in Korrelation bringt.

8. Verfahren nach Anspruch 6 oder Anspruch 7, dadurch gekennzeichnet, daß es ferner die folgenden Schritte aufweist, in welchen man zwischen den vorangegangenen Schritten c) und d):
- die elektrischen Signale verstärkt, die den Schwingungen entsprechen, welche durch den Schwingungsfühler (11) erfaßt wurden,
- den Bezugsschwellen-Nullwert dieses Signals festlegt,
- dieses selbe Signal durch ein Bandpaßfilter (45) durchgehen läßt,
- und das gefilterte Signal zurückrichtet.
